# EUROPÄISCHE PATENTSCHRIFT

(11) **EP 4 355 596 B1**
(45) Veröffentlichungstag und Bekanntmachung des Hinweises auf die Patenterteilung: **09.07.2025**
(21) Anmeldenummer: 22724465.4
(22) Anmeldetag: 04.05.2022
(51) Int. Cl.: B60H 1/00, B60H 1/14

(54) **KÜHLSYSTEM FÜR EIN KRAFTFAHRZEUG UND VERFAHREN ZUM BETRIEB EINES KÜHLSYSTEMS**
COOLING SYSTEM FOR A MOTOR VEHICLE AND METHOD FOR OPERATING A COOLING SYSTEM
SYSTÈME DE REFROIDISSEMENT POUR UN VÉHICULE À MOTEUR ET PROCÉDÉ DE FONCTIONNEMENT D'UN SYSTÈME DE REFROIDISSEMENT

(30) Priorität: 17.06.2021 DE 102021115743
(43) Veröffentlichungstag der Anmeldung: 24.04.2024
(73) Patentinhaber: HELLA GmbH & Co. KGaA, 59552 Lippstadt (DE)
(72) Erfinder: TIEMEYER, Sebastian, 44143 Dortmund (DE)
(74) Vertreter: Behr-Wenning, Gregor
(86) Internationale Anmeldenummer: PCT/EP2022/061976
(87) Internationale Veröffentlichungsnummer: WO 2022/263050

(56) Entgegenhaltungen:
- EP-A1- 1 291 206
- CN-A- 110 481 275
- DE-T5- 112014 001 830

## Beschreibung

Die vorliegende Erfindung bezieht sich auf ein Kühlsystem für ein Kraftfahrzeug der im Oberbegriff des Anspruchs 1 genannten Art.

Derartige Kühlsysteme sind aus dem Stand der Technik in zahlreichen Ausführungsvarianten bereits bekannt. Die bekannten Kühlsysteme für Kraftfahrzeuge umfassen einerseits einen Batterieteilkreislauf mit einer ersten Kühlmittelpumpe und einer Batterie und andererseits einen Heizteilkreislauf zum Beheizen einer Fahrgastzelle des Kraftfahrzeugs mit einer zweiten Kühlmittelpumpe, einem Heizluftradiator und einer Kühlmittelheizung zum Beheizen des in dem Heizteilkreislauf strömenden Kühlmittels.

Aus der DE 11 2014 001 830 T5 ist ein Fahrzeugwärmemanagementsystem für ein Fahrzeug bekannt, das ein erstes Schaltventil, das mit wenigstens einer Vorrichtung in einer Gruppe mehrerer Vorrichtungen, durch die ein Wärmemedium zirkuliert, einer Wärmemediumabgabeseite einer ersten Pumpe und einer Wärmemediumabgabeseite einer zweiten Pumpe parallel zueinander verbunden ist, und ein zweites Schaltventil, das mit der wenigstens einen Vorrichtung in der Vorrichtungsgruppe, einer Wärmemediumansaugseite der ersten Pumpe und einer Wärmemediumansaugseite der zweiten Pumpe parallel zueinander verbunden ist, umfasst. Eine zweite Vorrichtung ist bereitgestellt, die zulassen muss, dass das durch eine in der Vorrichtungsgruppe enthaltene erste Vorrichtung zirkulierende Wärmemedium durch die zweite Vorrichtung strömt. Eine Seite einer Wärmemediumeinlassseite und einer Wärmemediumauslassseite der zweiten Vorrichtung ist zwischen dem ersten Schaltventil oder dem zweiten Schaltventil und der ersten Vorrichtung verbunden. Folglich kann das Fahrzeugwärmemanagementsystem das durch die Vorrichtung zirkulierende Wärmemedium mit der einfachen Struktur umschalten.

Ferner betrifft die EP 1 291 206 A1 eine Wärmemanagementvorrichtung für mindestens einen ersten Wärmetauscher, insbesondere für ein Kraftfahrzeug, umfassend einen primären Kältemittelkreislauf, in dem ein Kältemittelfluid zum Zirkulieren gebracht wird und in dem mindestens ein Kompressor in Reihe geschaltet ist, einen Kondensator, einen Expander und einen Verdampfer, einen Sekundärkreislauf, in dem eine Wärmeübertragungsflüssigkeit zirkuliert und in dem mindestens der erste Wärmetauscher und der Kondensator oder der Verdampfer eingesetzt sind, wobei der Sekundärkreislauf Zirkulationsmittel für die Wärmeübertragung umfasst.

Darüber hinaus ist aus der CN 110 481 275 A ein integriertes Ausdehnungsgefäß für ein Elektrofahrzeug mit einem Mehrwegeventil bekannt, wobei das Mehrwegeventil fest mit einem Gehäuse des Ausdehnungsgefäßes verbunden ist oder einstückig mit diesem Gehäuse ausgebildet ist. Ferner ist das Gehäuse des Ausdehnungsgefäßes außerdem mit einem Kühlkreislauf für das Elektrofahrzeug ausgestattet. Mehrere kommunizierende Kühlschnittstellen und das Mehrwegeventil werden verwendet, um die Verbindungszustände der mehreren Kühlschnittstellen zu verändern. Die Kühlkreislaufwasserpumpe ist im Kühlkreislauf angeordnet und das Gehäuse der Kühlkreislaufwasserpumpe ist fest oder einstückig mit dem Gehäuse des Ausdehnungsgefäßes ausgebildet.

Hier setzt die vorliegende Erfindung an.

Der vorliegenden Erfindung liegt die Aufgabe zugrunde, ein Kühlsystem für ein Kraftfahrzeug zu verbessern.

Diese Aufgabe wird durch ein Kühlsystem für ein Kraftfahrzeug mit den Merkmalen des Anspruchs 1 gelöst, das dadurch gekennzeichnet ist, dass das Mehrwegeventil als ein Fünfwegeventil ausgebildet ist, wobei der Batterieteilkreislauf mit einem ersten und einem zweiten Anschluss des Fünfwegeventils, der Heizteilkreislauf mit dem ersten und einem dritten Anschluss des Fünfwegeventils und der Chillerteilkreislauf mit einem vierten und einem fünften Anschluss des Fünfwegeventils kühlmittelleitend verbunden ist, und wobei der erste Anschluss des Fünfwegeventils mit einem Eingang der ersten Kühlmittelpumpe, ein Ausgang der ersten Kühlmittelpumpe mit einem Eingang der Batterie, ein Ausgang der Batterie mit dem zweiten Anschluss des Fünfwegeventils, der dritte Anschluss des Fünfwegeventils mit einem Eingang der zweiten Kühlmittelpumpe, ein Ausgang der zweiten Kühlmittelpumpe mit einem Eingang der Kühlmittelheizung, ein Ausgang der Kühlmittelheizung mit einem Eingang des Heizluftradiators, ein Ausgang des Heizluftradiators mit dem ersten Anschluss des Fünfwegeventils und dem Eingang der ersten Kühlmittelpumpe, der vierte Anschluss des Fünfwegeventils mit einem Eingang des Chillers und ein Ausgang des Chillers mit dem fünften Anschluss des Fünfwegeventils kühlmittelleitend verbunden ist. Die Unteransprüche betreffen vorteilhafte Weiterbildungen der Erfindung.

Ein wesentlicher Vorteil der Erfindung liegt insbesondere darin, dass ein Kühlsystem für ein Kraftfahrzeug verbessert ist. Aufgrund der erfindungsgemäßen Ausbildung des Kühlsystems für ein Kraftfahrzeug ist eine sehr flexible Verteilung von Wärmeströmen in einem Kühlsystem für ein Kraftfahrzeug auf konstruktiv, fertigungstechnisch, schaltungstechnisch und verfahrenstechnisch einfache Art und Weise realisierbar. Mittels der Erfindung sind die Kernfunktionen des erfindungsgemäßen Kühlsystems, nämlich das Kühlen der Batterie mittels des Chillers, das Beheizen der Fahrgastzelle mittels der Kühlmittelheizung und des Heizluftradiators und das Beheizen der Batterie mittels der Kühlmittelheizung, kostengünstig und effizient umsetzbar. Ferner ist es mittels des als Fünfwegeventil ausgebildeten Mehrwegeventils möglich, die für die gewünschten Betriebsmodi erforderliche Schaltungstechnik auf konstruktiv und fertigungstechnisch besonders einfache Art und Weise in einem einzigen Mehrwegeventil zusammenzufassen. Die Schaltungstechnik zur Realisierung der vorgenannten Kernfunktionen des erfindungsgemäßen Kühlsystems ist sehr einfach und damit kostengünstig umgesetzt.

Grundsätzlich ist das erfindungsgemäße Kühlsystem für ein Kraftfahrzeug nach Art, Funktionsweise, Material und Dimensionierung in weiten geeigneten Grenzen frei wählbar. Insbesondere ist das erfindungsgemäße Kühlsystem bei als Elektrofahrzeugen ausgebildeten Kraftfahrzeugen vorteilhaft einsetzbar. Unter Elektrofahrzeugen sind hier allgemein alle Kraftfahrzeuge zu verstehen, bei denen der Antrieb des Kraftfahrzeugs zumindest teilweise mittels eines batteriebetriebenen Elektromotors erfolgt. Entsprechend sind auch Kraftfahrzeuge mit sogenannten Hybridantrieben als Elektrofahrzeuge im vorgenannten Sinn zu verstehen.

Eine besonders vorteilhafte Weiterbildung des erfindungsgemäßen Kühlsystems sieht vor, dass das Kühlsystem zusätzlich eine Wärmepumpe zur Klimatisierung der Fahrgastzelle aufweist, wobei der Chiller gleichzeitig als eine Komponente der Wärmepumpe ausgebildet ist. Hierdurch ist es möglich, Wärme aus der Umgebung und/oder Abwärme von dem Antriebsstrangteilkreislauf an den Fahrzeuginnenraum, also die Fahrgastzelle, zu transferieren und somit ein effizientes Heizen zu ermöglichen. Hierzu sind üblicherweise eine Vielzahl an Wärmetauschern und Kältemittelventilen notwendig. Die vorliegende Weiterbildung setzt hier an, indem das erfindungsgemäße Kühlsystem die vorgenannten Wärmepumpenfunktionen mittels des Chillers ermöglicht und dadurch Kosten und Aufwand im Kältemittelsystem der Wärmepumpe, insbesondere durch Wegfall von Komponenten bei der Wärmepumpe, reduziert.

Eine weitere vorteilhafte Weiterbildung des erfindungsgemäßen Kühlsystems sieht vor, dass der dritte Anschluss des Fünfwegeventils und der Eingang der zweiten Kühlmittelpumpe gemeinsam mittels eines Rückschlagventils mit dem Eingang der ersten Kühlmittelpumpe, dem ersten Anschluss des Fünfwegeventils und dem Ausgang des Heizluftradiators kühlmittelleitend verbunden sind, wobei das Rückschlagventil eine Kühlmittelströmung lediglich in Richtung des dritten Anschlusses des Fünfwegeventils und des Eingangs der zweiten Kühlmittelpumpe ermöglicht. Hierdurch ist das erfindungsgemäße Kühlsystem beispielsweise vor Trockenlauf und Druckstößen wirksam geschützt.

Eine andere besonders vorteilhafte Weiterbildung des erfindungsgemäßen Kühlsystems sieht vor, dass das Kühlsystem zusätzlich einen Antriebsstrangteilkreislauf mit einer dritten Kühlmittelpumpe, einer Leistungselektronik, einem Elektromotor und einem Kühlluftradiator zur Kühlung des in dem Antriebsstrangteilkreislauf strömenden Kühlmittels aufweist, wobei der Antriebsstrangteilkreislauf eine Bypassleitung zu dem Kühlluftradiator umfasst, und wobei der Batterieteilkreislauf und/oder der Heizteilkreislauf und/oder der Chillerteilkreislauf und/oder der Antriebsstrangteilkreislauf wahlweise mittels des vorgenannten Mehrwegeventils und eines weiteren Mehrwegeventils des Kühlsystems miteinander kühlmittelleitend verbindbar sind. Auf diese Weise ist die Effizienz des erfindungsgemäßen Kühlsystems wesentlich verbessert. Somit ist die Erfindung sowohl in einer vorgenannten kostenreduzierten Variante wie auch in einer effizienteren Variante gemäß der vorliegenden Weiterbildung verfügbar, ohne dass hierfür das grundlegende System verändert werden müsste. Zur Überführung der kostenreduzierten Variante in die effizientere Variante des erfindungsgemäßen Kühlsystems sind lediglich geringfügige Anpassungen erforderlich.

Eine vorteilhafte Weiterbildung der vorgenannten Weiterbildung des erfindungsgemäßen Kühlsystems, rückbezogen auf Anspruch 1 oder 2, sieht vor, dass das Mehrwegeventil und das weitere Mehrwegeventil jeweils als ein Fünfwegeventil ausgebildet sind, wobei der Batterieteilkreislauf mit einem ersten Anschluss des weiteren Fünfwegeventils und einem zweiten Anschluss des Fünfwegeventils, der Heizteilkreislauf mit einem ersten und einem dritten Anschluss des Fünfwegeventils und einem zweiten Anschluss des weiteren Fünfwegeventils, der Chillerteilkreislauf mit einem vierten Anschluss des Fünfwegeventils und mit einem dritten Anschluss des weiteren Fünfwegeventils, der Antriebsstrangteilkreislauf mit einem fünften Anschluss des Fünfwegeventils und einem vierten und einem fünften Anschluss des weiteren Fünfwegeventils kühlmittelleitend verbunden ist. Hierdurch ist es mittels der beiden als Fünfwegeventile ausgebildeten Mehrwegeventile möglich, die für die gewünschten Betriebsmodi erforderliche Schaltungstechnik auch für die effizientere Variante des erfindungsgemäßen Kühlsystems auf konstruktiv und fertigungstechnisch besonders einfache Art und Weise zusammenzufassen.

Eine vorteilhafte Weiterbildung der letztgenannten Ausführungsform des erfindungsgemäßen Kühlsystems sieht vor, dass der erste Anschluss des Fünfwegeventils mit dem zweiten Anschluss des weiteren Fünfwegeventils, der erste Anschluss des weiteren Fünfwegeventils mit einem Eingang der ersten Kühlmittelpumpe, ein Ausgang der ersten Kühlmittelpumpe mit einem Eingang der Batterie, ein Ausgang der Batterie mit dem zweiten Anschluss des Fünfwegeventils, der dritte Anschluss des Fünfwegeventils mit einem Eingang der zweiten Kühlmittelpumpe, ein Ausgang der zweiten Kühlmittelpumpe mit einem Eingang der Kühlmittelheizung, ein Ausgang der Kühlmittelheizung mit einem Eingang des Heizluftradiators, ein Ausgang des Heizluftradiators mit dem zweiten Anschluss des weiteren Fünfwegeventils, der vierte Anschluss des Fünfwegeventils mit einem Eingang des Chillers, ein Ausgang des Chillers mit dem dritten Anschluss des weiteren Fünfwegeventils, der vierte Anschluss des weiteren Fünfwegeventils mit einem Eingang des Kühlluftradiators, ein Ausgang des Kühlluftradiators mit einem Eingang der dritten Kühlmittelpumpe, der fünfte Anschluss des weiteren Mehrwegeventils mittels der Bypassleitung mit dem Eingang der dritten Kühlmittelpumpe, ein Ausgang der dritten Kühlmittelpumpe mit einem Eingang der Leistungselektronik, ein Ausgang der Leistungselektronik mit einem Eingang des Elektromotors, ein Ausgang des Elektromotors mit dem fünften Anschluss des Fünfwegeventils kühlmittelleitend verbunden sind. Auf diese Weise ist die Schaltungstechnik zur Realisierung der effizienteren Variante des erfindungsgemäßen Kühlsystems sehr einfach und damit kostengünstig umgesetzt.

Eine vorteilhafte Weiterbildung des erfindungsgemäßen Kühlsystems gemäß Anspruch 6 sieht vor, dass der dritte Anschluss des Fünfwegeventils und der Eingang der zweiten Kühlmittelpumpe gemeinsam mittels eines Rückschlagventils mit dem zweiten Anschluss des weiteren Fünfwegeventils und des Ausgangs des Heizluftradiators kühlmittelleitend verbunden sind, wobei das Rückschlagventil eine Kühlmittelströmung lediglich in Richtung des dritten Anschlusses des Fünfwegeventils und des Eingangs der zweiten Kühlmittelpumpe ermöglicht. Hierdurch ist das erfindungsgemäße Kühlsystem gemäß der effizienteren Variante, analog zu der kostenreduzierten Variante, beispielsweise vor Trockenlauf und Druckstößen wirksam geschützt.

Mittels der effizienteren Variante des erfindungsgemäßen Kühlsystems ist ein erster Betriebsmodus realisierbar, in dem der Batterieteilkreislauf und der Chillerteilkreislauf sowie der Antriebsstrangteilkreislauf und der Heizteilkreislauf jeweils verbunden sind. Der erste Betriebsmodus ist von Vorteil bei sehr hohen Außentemperaturen und/oder hoher Leistungsabgabe des Antriebstrangs, da die Batterie über den Chiller unabhängig von der Umgebungstemperatur gekühlt werden kann, während die Abwärme des Antriebsstrangs über den Kühlluftradiator an die Umgebung abgegeben wird.

Ferner ist mittels der effizienteren Variante des erfindungsgemäßen Kühlsystems ein zweiter Betriebsmodus realisierbar, der bei moderat kalten Außentemperaturen und mittlerer Leistungsabgabe des Antriebstrangs von Vorteil ist, da hier die Abwärme des Antriebsstrangs direkt zur effizienten Erwärmung des Fahrzeuginnenraums, also der Fahrgastzelle, genutzt werden kann. Dabei wird das Mehrwegeventil dazu genutzt, um lediglich einen Teil oder den gesamten Kühlmittelstrom aus dem Antriebsstrangteilkreislauf über den Heizteilkreislauf zu leiten, also zu Erwärmen. Die Batterie kann währenddessen, sofern notwendig, über den Chiller gekühlt werden.

Darüber hinaus ist mittels der effizienteren Variante des erfindungsgemäßen Kühlsystems ein dritter Betriebsmodus realisierbar, bei dem der Batterieteilkreislauf und der Heizteilkreislauf sowie der Antriebsstrangteilkreislauf und der Chillerteilkreislauf jeweils verbunden sind. Der dritte Betriebsmodus ist von Vorteil bei geringen Außentemperaturen, also bei einem Heizbedarf für die Batterie und/oder des Fahrzeuginnenraums, also der Fahrgastzelle, da in diesem Betriebsmodus die Batterie und der Fahrzeuginnenraum über die Kühlmittelheizung erwärmt werden können. Dabei wird das Mehrwegeventil genutzt, um lediglich einen Teil des Kühlmittelstroms aus dem Batterieteilkreislauf über den Heizteilkreislauf zu leiten, also diesen zu Erwärmen.

Des Weiteren sind der Antriebsstrangteilkreislauf und der Chillerteilkreislauf verbunden, um die Abwärme des Antriebsstrangteilkreislaufs über den Chiller an das Kühlmittel und anschließend in den Fahrzeuginnenraum, also die Fahrgastzelle, zu transferieren. Dabei wird das Kühlmittel im Chiller auf eine Temperatur heruntergekühlt, welche unterhalb der Umgebungstemperatur liegt. Infolgedessen wird das Kühlmittel beim Durchströmen des Kühlradiators auf Umgebungstemperatur wieder erwärmt, also der Umgebungsluft wird die entsprechende Wärme entzogen. Demnach ermöglicht der dritte Betriebsmodus neben dem Beheizen der Batterie und des Fahrzeuginnenraums die Nutzung der Umgebungs- und Antriebsstrangwärme in Form einer kombinierten Umgebungs- und Antriebsstrangwärmepumpe, sofern das Kühlsystem rückbezogen auf Anspruch 2, also ein Kühlsystem mit Wärmepumpe, Anwendung findet.

Auch ist mittels der effizienteren Variante des erfindungsgemäßen Kühlsystems ein vierter Betriebsmodus realisierbar. Dieser vierte Betriebsmodus ist von Vorteil bei sehr geringen Außentemperaturen, also bei einem Heizbedarf für die Batterie und/oder des Fahrzeuginnenraums, also der Fahrgastzelle, da in diesem vierten Betriebsmodus die Batterie und der Fahrzeuginnenraum über die Kühlmittelheizung erwärmt werden können. Dabei wird das Mehrwegeventil dazu genutzt, um lediglich einen Teil des Kühlmittelstroms aus dem Batterieteilkreislauf über den Heizteilkreislauf zu leiten, also diesen zu Erwärmen. Des Weiteren sind der Antriebsstrangteilkreislauf und der Chillerteilkreislauf verbunden, um die Abwärme des Antriebsstrangteilkreislaufs über den Chiller an das Kühlmittel und anschließend in den Fahrzeuginnenraum zu transferieren. Im Unterschied zu dem dritten Betriebsmodus wird das Kühlmittel mittels des weiteren Mehrwegeventils an dem Kühlluftradiator vorbei durch die Bypassleitung direkt zu der dritten Kühlmittelpumpe, die der Leistungselektronik und dem Elektromotor vorgeschaltet ist, zurückgeleitet. Dies ist notwendig bei sehr geringen Umgebungstemperaturen, welche unterhalb der minimal möglichen Kühlmitteltemperatur durch den Chiller liegen und verhindert folglich eine Abgabe von Wärme aus dem Kühlmittel an die Umgebung. Demnach ermöglicht der vierte Betriebsmodus, analog zu dem dritten Betriebsmodus, neben dem Beheizen der Batterie und des Fahrzeuginnenraum die Nutzung der Antriebsstrangwärme in der Funktion einer Antriebsstrangwärmepumpe, sofern das Kühlsystem rückbezogen auf Anspruch 2, also ein Kühlsystem mit Wärmepumpe, Anwendung findet.

Ebenfalls ist mittels der effizienteren Variante des erfindungsgemäßen Kühlsystems ein fünfter Betriebsmodus realisierbar, bei dem es keiner Temperierung der Batterie bedarf, so dass die erste Kühlmittelpumpe ausgeschaltet ist. Der Antriebsstrang erzeugt nutzbare Abwärme zwecks Temperierung des Fahrzeuginnenraums, also der Fahrgastzelle, welche über den Chiller an die Wärmepumpe, nämlich an das Kältemittelsystem der Wärmepumpe, transferiert wird. Darüber hinaus wird der Fahrzeuginnenraum über den Heizteilkreislauf mittels der Kühlmittelheizung zusätzlich erwärmt, sofern die Antriebsstrangwärme nicht ausreichend ist.

Ferner ist mittels der effizienteren Variante des erfindungsgemäßen Kühlsystems ein sechster Betriebsmodus realisierbar, bei dem die Batterie über die Antriebsstrangabwärme erwärmt wird, während der Heizteilkreislauf den Fahrzeuginnenraum, also die Fahrgastzelle, mittels der Kühlmittelheizung, beispielsweise elektrisch, erwärmt.

Darüber hinaus ist mittels der effizienteren Variante des erfindungsgemäßen Kühlsystems ein siebter Betriebsmodus realisierbar, bei dem alle Teilkreisläufe des erfindungsgemäßen Kühlsystems miteinander verbunden sind. Dabei sind zunächst der Antriebsstrangteilkreislauf und der Heizteilkreislauf über das Mehrwegeventil verbunden. Anschließend verbindet das weitere Mehrwegeventil den Heizteilkreislauf mit dem Batterieteilkreislauf. Ferner verbindet das Mehrwegeventil den Batterieteilkreislauf mit dem Chillerteilkreislauf. Schließlich verbindet das weitere Mehrwegeventil den Chillerteilkreislauf und den Antriebsstrangteilkreislauf. Der siebte Betriebsmodus ist von Vorteil bei kalten Außentemperaturen und hoher Leistungsabgabe des Antriebstrangs, da hier die Abwärme des Antriebsstrangs direkt zur effizienten Erwärmung der Batterie und des Fahrzeuginnenraums, also der Fahrgastzelle, genutzt werden kann. Dabei wird das Mehrwegeventil genutzt, um lediglich einen Teil oder den gesamten Kühlmittelstrom aus dem Antriebsstrangteilkreislauf über den Heizteilkreislauf zu leiten, also zu Erwärmen. Anschließend wird die Batterie mit der Restwärme in dem Kühlmittel geheizt.

Anhand der beigefügten, grob schematischen Zeichnung wird die Erfindung nachfolgend näher erläutert. Dabei zeigt:
- Fig. 1: ein erstes Ausführungsbeispiel des erfindungsgemäßen Kühlsystems in einem Verfahrensschaltbild,
- Fig. 2: ein zweites Ausführungsbeispiel des erfindungsgemäßen Kühlsystems in einem Verfahrensschaltbild,
- Fig. 3: das zweite Ausführungsbeispiel in einem ersten Betriebsmodus,
- Fig. 4: das zweite Ausführungsbeispiel in einem zweiten Betriebsmodus,
- Fig. 5: das zweite Ausführungsbeispiel in einem dritten Betriebsmodus,
- Fig. 6: das zweite Ausführungsbeispiel in einem vierten Betriebsmodus,
- Fig. 7: das zweite Ausführungsbeispiel in einem fünften Betriebsmodus,
- Fig. 8: das zweite Ausführungsbeispiel in einem sechsten Betriebsmodus und
- Fig. 9: das zweite Ausführungsbeispiel in einem siebten Betriebsmodus.

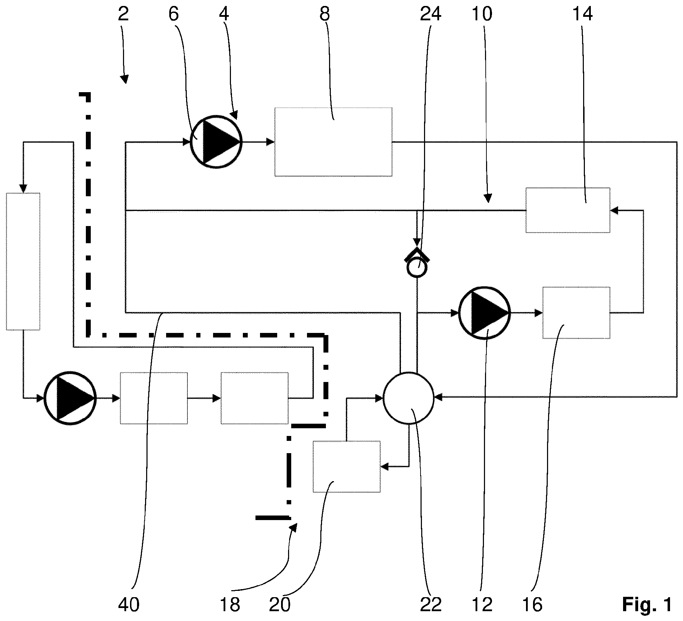

In der Fig. 1 ist ein erstes Ausführungsbeispiel des erfindungsgemäßen Kühlsystems für ein Kraftfahrzeug dargestellt.

Bei dem nicht näher dargestellten Kraftfahrzeug handelt es sich um ein als Elektrofahrzeug ausgebildetes Kraftfahrzeug.

Das Kühlsystem 2 zum Umwälzen eines nicht dargestellten und als Kühlflüssigkeit ausgebildeten Kühlmittels umfasst einerseits einen Batterieteilkreislauf 4 mit einer ersten Kühlmittelpumpe 6 und einer Batterie 8 und andererseits einen Heizteilkreislauf 10 zum Beheizen einer nicht dargestellten Fahrgastzelle des Kraftfahrzeugs mit einer zweiten Kühlmittelpumpe 12, einem Heizluftradiator 14 und einer als eine elektrische PTC-Heizung ausgebildete Kühlmittelheizung 16 zum Beheizen des in dem Heizteilkreislauf 10 strömenden Kühlmittels.

Ferner weist das Kühlsystem 2 zusätzlich einen Chillerteilkreislauf 18 mit einem Chiller 20 auf, wobei der Batterieteilkreislauf 4 und/oder der Heizteilkreislauf 10 und/oder der Chillerteilkreislauf 18 wahlweise mittels eines Mehrwegeventils 22 des Kühlsystems 2 miteinander kühlmittelleitend verbindbar sind.

Das Kühlsystem 2 weist hier zusätzlich eine nicht näher dargestellte Wärmepumpe zur Klimatisierung der Fahrgastzelle auf, wobei der Chiller 20 gleichzeitig als eine Komponente der Wärmepumpe ausgebildet ist.

Das Mehrwegeventil 22 ist als ein Fünfwegeventil ausgebildet, wobei der Batterieteilkreislauf 4 mit einem ersten und einem zweiten Anschluss des Fünfwegeventils 22, der Heizteilkreislauf 10 mit dem ersten und einem dritten Anschluss des Fünfwegeventils 22 und der Chillerteilkreislauf 18 mit einem vierten und einem fünften Anschluss des Fünfwegeventils 22 kühlmittelleitend verbunden ist.

Konkret sind der erste Anschluss des Fünfwegeventils 22 mit einem Eingang der ersten Kühlmittelpumpe 6, ein Ausgang der ersten Kühlmittelpumpe 6 mit einem Eingang der Batterie 8, ein Ausgang der Batterie 8 mit dem zweiten Anschluss des Fünfwegeventils 22, der dritte Anschluss des Fünfwegeventils 22 mit einem Eingang der zweiten Kühlmittelpumpe 12, ein Ausgang der zweiten Kühlmittelpumpe 12 mit einem Eingang der Kühlmittelheizung 16, ein Ausgang der Kühlmittelheizung 16 mit einem Eingang des Heizluftradiators 14, ein Ausgang des Heizluftradiators 14 mit dem ersten Anschluss des Fünfwegeventils 22 und dem Eingang der ersten Kühlmittelpumpe 6, der vierte Anschluss des Fünfwegeventils 22 mit einem Eingang des Chillers 20 und ein Ausgang des Chillers 20 mit dem fünften Anschluss des Fünfwegeventils 22 kühlmittelleitend verbunden.

Ferner sind der dritte Anschluss des Fünfwegeventils 22 und der Eingang der zweiten Kühlmittelpumpe 12 gemeinsam mittels eines Rückschlagventils 24 mit dem Eingang der ersten Kühlmittelpumpe 6, dem ersten Anschluss des Fünfwegeventils 22 und dem Ausgang des Heizluftradiators 14 kühlmittelleitend verbunden, wobei das Rückschlagventil 24 eine Kühlmittelströmung lediglich in Richtung des dritten Anschlusses des Fünfwegeventils 22 und des Eingangs der zweiten Kühlmittelpumpe 12 ermöglicht.

Das erste Ausführungsbeispiel entspricht hier der kostenreduzierten Variante gemäß der Beschreibungseinleitung, so dass hier auf die diesbezüglichen Ausführungen in der Beschreibungseinleitung Bezug genommen wird.

Ein Antriebsstrang des Kraftfahrzeugs, mit einer Leistungselektronik, einem Elektromotor und einem Kühlsystem mit einer dritten Kühlmittelpumpe, der Leistungselektronik, dem Elektromotor und einem Kühlluftradiator zur Kühlung dieses Antriebsstrangs ist mit dem Kühlsystem 2 gemäß dem ersten Ausführungsbeispiel nicht wirkverbunden. Dies ist in der Fig. 1 durch eine breite strichpunktierte Trennlinie verdeutlicht, wobei das Kühlsystem für den vorgenannten Antriebsstrang in der Bildebene der Fig. 1 links von der strichpunktierten Trennlinie angedeutet ist, während das Kühlsystem 2 gemäß dem ersten Ausführungsbeispiel in der Bildebene der Fig. 1 rechts von der strichpunktierten Trennlinie dargestellt ist.

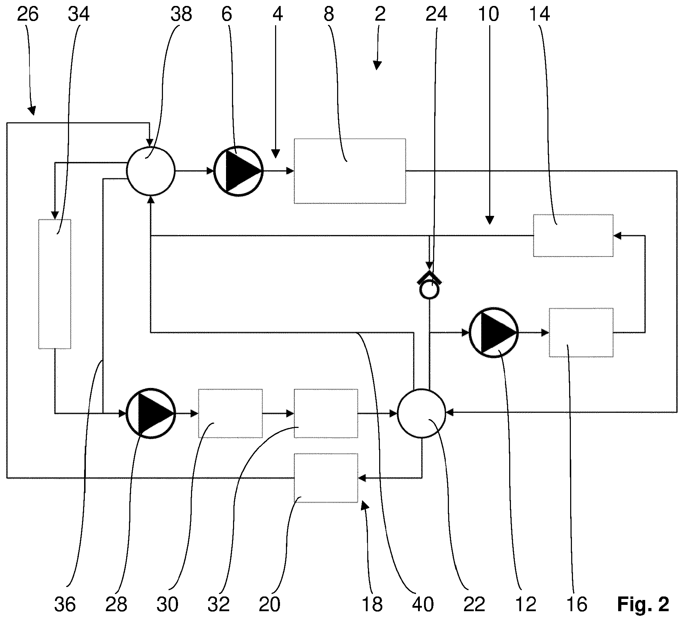

In den Fig. 2 bis 9 ist ein zweites Ausführungsbeispiel des erfindungsgemäßen Kühlsystems dargestellt. Gleiche oder gleichwirkende Bauteile sind mit den gleichen Bezugszeichen wie in dem ersten Ausführungsbeispiel bezeichnet.

Im Unterschied zu dem ersten Ausführungsbeispiel weist das Kühlsystem 2 hier zusätzlich einen Antriebsstrangteilkreislauf 26 mit einer dritten Kühlmittelpumpe 28, einer Leistungselektronik 30, einem Elektromotor 32 und einem Kühlluftradiator 34 zur Kühlung des in dem Antriebsstrangteilkreislauf 26 strömenden Kühlmittels auf, wobei der Antriebsstrangteilkreislauf 26 eine Bypassleitung 36 zu dem Kühlluftradiator 34 umfasst, und wobei der Batterieteilkreislauf 4 und/oder der Heizteilkreislauf 10 und/oder der Chillerteilkreislauf 18 und/oder der Antriebsstrangteilkreislauf 26 mittels des vorgenannten Mehrwegeventils 22 und eines weiteren Mehrwegeventils 38 des Kühlsystems 2 wahlweise miteinander kühlmittelleitend verbindbar sind.

Das Mehrwegeventil 22 und das weitere Mehrwegeventil 38 sind hier jeweils als ein Fünfwegeventil ausgebildet, wobei der Batterieteilkreislauf 4 mit einem ersten Anschluss des weiteren Fünfwegeventils 38 und einem zweiten Anschluss des Fünfwegeventils 22, der Heizteilkreislauf 10 mit einem ersten und einem dritten Anschluss des Fünfwegeventils 22 und einem zweiten Anschluss des weiteren Fünfwegeventils 38, der Chillerteilkreislauf 18 mit einem vierten Anschluss des Fünfwegeventils 22 und mit einem dritten Anschluss des weiteren Fünfwegeventils 38, der Antriebsstrangteilkreislauf 26 mit einem fünften Anschluss des Fünfwegeventils 22 und einem vierten und einem fünften Anschluss des weiteren Fünfwegeventils 38 kühlmittelleitend verbunden ist.

Konkret sind der erste Anschluss des Fünfwegeventils 22 mit dem zweiten Anschluss des weiteren Fünfwegeventils 38, der erste Anschluss des weiteren Fünfwegeventils 38 mit einem Eingang der ersten Kühlmittelpumpe 6, ein Ausgang der ersten Kühlmittelpumpe 6 mit einem Eingang der Batterie 8, ein Ausgang der Batterie 8 mit dem zweiten Anschluss des Fünfwegeventils 22, der dritte Anschluss des Fünfwegeventils 22 mit einem Eingang der zweiten Kühlmittelpumpe 12, ein Ausgang der zweiten Kühlmittelpumpe 12 mit einem Eingang der Kühlmittelheizung 16, ein Ausgang der Kühlmittelheizung 16 mit einem Eingang des Heizluftradiators 14, ein Ausgang des Heizluftradiators 14 mit dem zweiten Anschluss des weiteren Fünfwegeventils 38, der vierte Anschluss des Fünfwegeventils 22 mit einem Eingang des Chillers 20, ein Ausgang des Chillers 20 mit dem dritten Anschluss des weiteren Fünfwegeventils 38, der vierte Anschluss des weiteren Fünfwegeventils 38 mit einem Eingang des Kühlluftradiators 34, ein Ausgang des Kühlluftradiators 34 mit einem Eingang der dritten Kühlmittelpumpe 28, der fünfte Anschluss des weiteren Mehrwegeventils 38 mittels der Bypassleitung 36 mit dem Eingang der dritten Kühlmittelpumpe 28, ein Ausgang der dritten Kühlmittelpumpe 28 mit einem Eingang der Leistungselektronik 30, ein Ausgang der Leistungselektronik 30 mit einem Eingang des Elektromotors 32, ein Ausgang des Elektromotors 32 mit dem fünften Anschluss des Fünfwegeventils 38 kühlmittelleitend verbunden.

Ferner sind der dritte Anschluss des Fünfwegeventils 22 und der Eingang der zweiten Kühlmittelpumpe 12 gemeinsam mittels des Rückschlagventils 24 mit dem zweiten Anschluss des weiteren Fünfwegeventils 38 und des Ausgangs des Heizluftradiators 14 kühlmittelleitend verbunden, wobei das Rückschlagventil 24 eine Kühlmittelströmung lediglich in Richtung des dritten Anschlusses des Fünfwegeventils 22 und des Eingangs der zweiten Kühlmittelpumpe 12 ermöglicht.

Das zweite Ausführungsbeispiel entspricht hier der effizienteren Variante gemäß der Beschreibungseinleitung, so dass hier auf die diesbezüglichen Ausführungen in der Beschreibungseinleitung Bezug genommen wird.

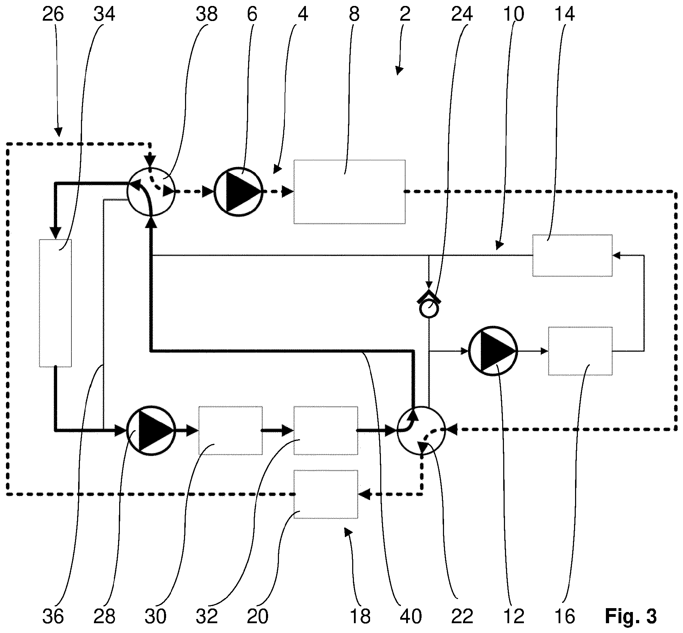

Im Nachfolgenden wird die Funktionsweise des erfindungsgemäßen Kühlsystems gemäß dem vorliegenden ersten und zweiten Ausführungsbeispiel anhand der Fig. 1 bis 9 näher erläutert. Kühlmittelströme sind in der jeweiligen Fig. 3 bis 9 durch im Vergleich zu den übrigen Linien durchgezogene und gestrichelte Linien mit größerer Strichstärke sowie Pfeile zur Kennzeichnung der Strömungsrichtung dargestellt.

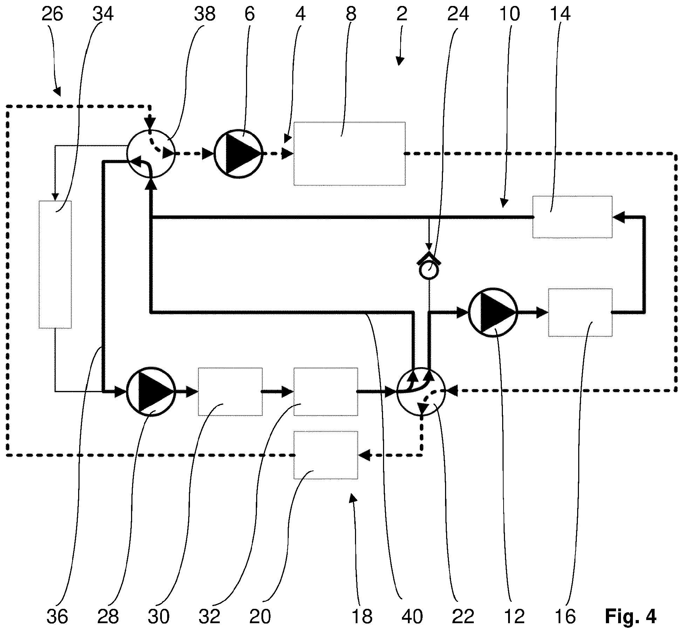

Mittels der kostenreduzierten Variante, also der Erfindung gemäß dem ersten Ausführungsbeispiel, ist es möglich, in Abhängigkeit eines mittels des Mehrwegeventils 22 eingestellten Betriebsmodus aus einer Mehrzahl von Betriebsmodi des Kühlsystems 2 die Batterie 8 mittels des Chillers 20 zu kühlen und/oder die Fahrgastzelle mittels der Kühlmittelheizung 16 und des Heizluftradiators 14 zu beheizen und/oder die Batterie 8 mittels des Kühlmittelheizung 16 zu beheizen. Entsprechend können mittels der kostenreduzierten Variante der Erfindung, also dem ersten Ausführungsbeispiel, die Kernfunktionen des Kühlsystems 2 bei im Vergleich zum zweiten Ausführungsbeispiel geringerer Effizienz durchgeführt werden. Zusätzlich dazu ermöglicht die effizientere Variante der Erfindung gemäß dem zweiten Ausführungsbeispiel das Folgende:
In Abhängigkeit des mittels des Mehrwegeventils 22 und des weiteren Mehrwegeventils 38 eingestellten Betriebsmodus aus einer Mehrzahl von Betriebsmodi des Kühlsystems 2 sind gleichzeitig zum einen der Batterieteilkreislauf 4 mit dem Chillerteilkreislauf 18 und zum anderen der Antriebsstrangteilkreislauf 26 mit dem Heizteilkreislauf 10 kühlmittelleitend verbunden. Beispielsweise, indem das in dem Antriebsstrangteilkreislauf 26 strömende Kühlmittel durch den Kühlluftradiator 34 strömt und/oder, dass das in dem Heizteilkreislauf 10 strömende Kühlmittel teilweise oder vollständig mittels einer weiteren Bypassleitung 40 des Kühlsystems 2 zu der Kühlmittelheizung 16 und dem Heizluftradiator 14 im Bypass geführt wird. Siehe hierzu die Fig. 3 und 4, in denen der erste und der zweite Betriebsmodus des Kühlsystems 2 gemäß der Beschreibungseinleitung dargestellt sind.

Hierbei sei angemerkt, dass auch das Kühlsystem 2 gemäß des ersten Ausführungsbeispiels über eine weitere Bypassleitung 40 verfügt. Siehe hierzu die Fig. 1.

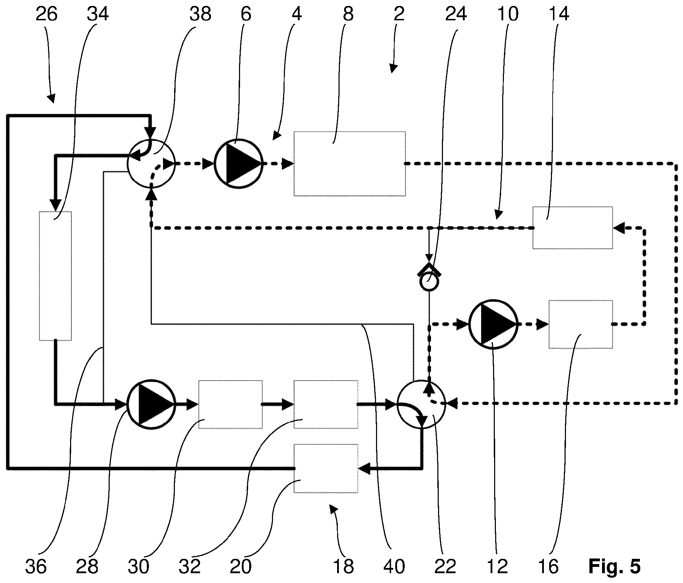

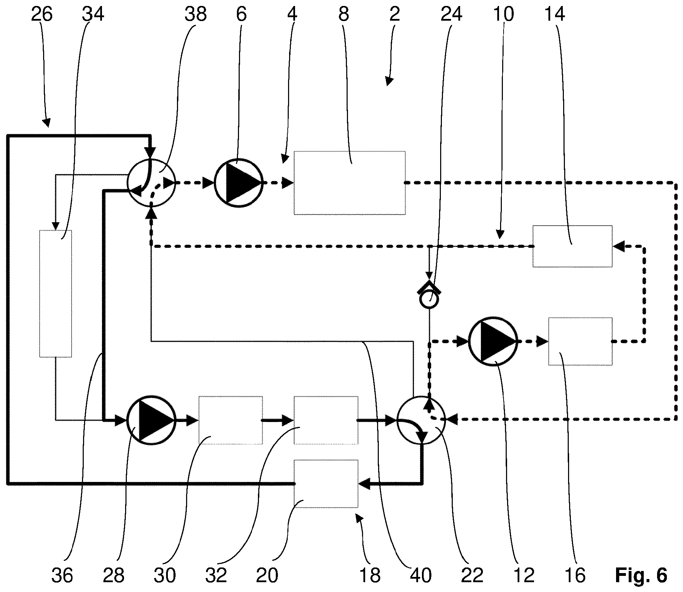

In Abhängigkeit des mittels des Mehrwegeventils 22 und des weiteren Mehrwegeventils 38 eingestellten Betriebsmodus des Kühlsystems 2 sind gleichzeitig zum einen der Batterieteilkreislauf 4 mit dem Heizteilkreislauf 10 und zum anderen der Antriebsstrangteilkreislauf 26 mit dem Chillerteilkreislauf 18 kühlmittelleitend verbunden, beispielsweise derart, dass das in dem Antriebsstrangteilkreislauf 26 strömende Kühlmittel durch den Kühlluftradiator 34 strömt, und/oder, dass das in dem Heizteilkreislauf 10 strömende Kühlmittel teilweise oder vollständig mittels der weiteren Bypassleitung 40 des Kühlsystems 2 zu der Kühlmittelheizung 16 und dem Heizluftradiator 14 im Bypass geführt wird. Siehe hierzu die Fig. 5 und 6, in denen der dritte und vierte Betriebsmodus des Kühlsystems 2 gemäß der Beschreibungseinleitung dargestellt sind.

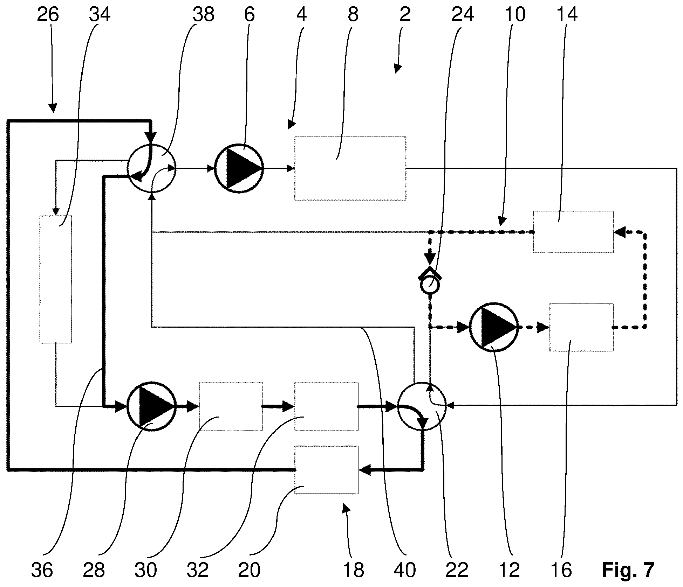

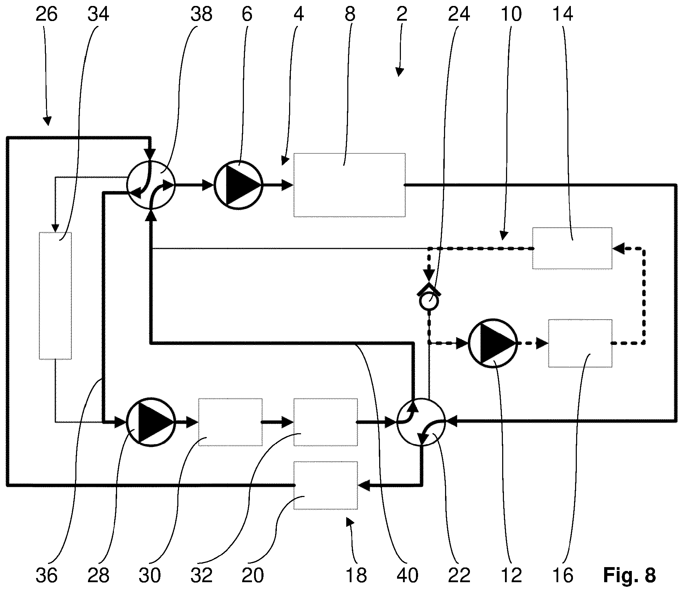

Ferner sind in Abhängigkeit des mittels des Mehrwegeventils 22 und des weiteren Mehrwegeventils 38 eingestellten Betriebsmodus des Kühlsystems 2 gleichzeitig der Antriebsstrangteilkreislauf 26 und der Chillerteilkreislauf 18 oder der Batterieteilkreislauf 4, der Antriebsstrangteilkreislauf 26 und der Chillerteilkreislauf 18, kühlmittelleitend verbunden und das Kühlmittel in dem Heizteilkreislauf 10 wird unabhängig von dem Batterieteilkreislauf 4, dem Antriebsstrangkreislauf 10 und dem Chillerteilkreislauf 18 umgewälzt. Siehe hierzu die Fig. 7 und 8, in denen der fünfte und sechste Betriebsmodus des Kühlsystems 2 gemäß der Beschreibungseinleitung dargestellt sind.

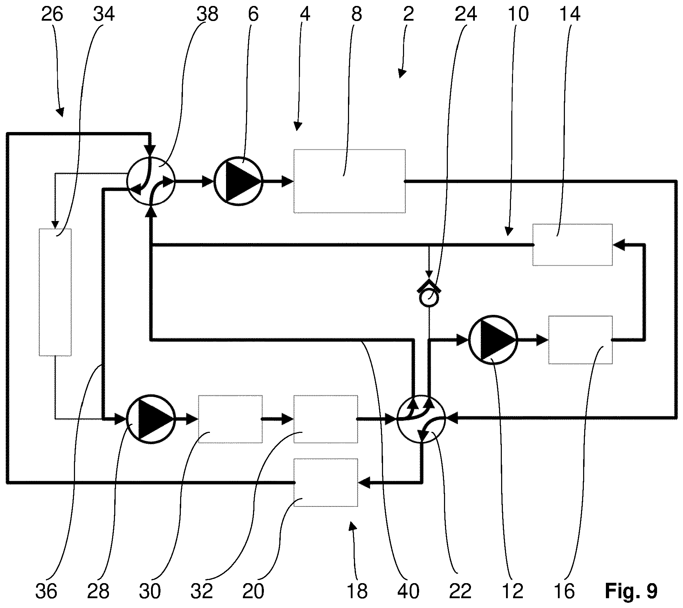

Darüber hinaus sind in Abhängigkeit des mittels des Mehrwegeventils 22 und des weiteren Mehrwegeventils 38 eingestellten Betriebsmodus des Kühlsystems 2 gleichzeitig der Batterieteilkreislauf 4, der Chillerteilkreislauf 18, der Antriebsstrangteilkreislauf 26 und der Heizteilkreislauf 10 miteinander kühlmittelleitend verbunden, beispielsweise derart, dass das in dem Antriebsstrangteilkreislauf 26 strömende Kühlmittel durch den Kühlluftradiator 34 strömt, und/oder, dass das in dem Heizteilkreislauf 10 strömende Kühlmittel teilweise oder vollständig mittels der weiteren Bypassleitung 40 des Kühlsystems 2 zu der Kühlmittelheizung 16 und dem Heizluftradiator 14 im Bypass geführt wird. Siehe hierzu die Fig. 9, in der der siebte Betriebsmodus des Kühlsystems 2 gemäß der Beschreibungseinleitung dargestellt ist.

Bezüglich der vorgenannten Ausführungen gemäß dem ersten und dem zweiten Ausführungsbeispiel und der genannten Betriebsmodi wird hier wiederum auf die diesbezüglichen Ausführungen in der Beschreibungseinleitung verwiesen.

Aufgrund der erfindungsgemäßen Ausbildung des Kühlsystems 2 ist eine sehr flexible Verteilung von Wärmeströmen in dem Kühlsystem 2 des Kraftfahrzeugs, nämlich des Elektrofahrzeugs, auf konstruktiv, fertigungstechnisch, schaltungstechnisch und verfahrenstechnisch einfache Art und Weise realisierbar. Hiermit sind die Kernfunktionen des Kühlsystems 2, nämlich das Kühlen der Batterie 8 mittels des Chillers 20, das Beheizen der Fahrgastzelle mittels der Kühlmittelheizung 16 und des Heizluftradiators 14 und das Beheizen der Batterie 8 mittels der Kühlmittelheizung 16, kostengünstig und effizient umsetzbar. Zusätzlich dazu ist die Effizienz des Kühlsystems 2 gemäß des zweiten Ausführungsbeispiels im Vergleich zu der Effizienz des kostengünstigeren ersten Ausführungsbeispiels wesentlich verbessert. Somit ist die Erfindung sowohl in einer kostenreduzierten Variante wie auch in einer effizienteren Variante verfügbar, ohne das hierfür das grundlegende System verändert werden müsste. Zur Überführung der kostenreduzierten Variante in die effizientere Variante des Kühlsystems 2 sind lediglich geringfügige Anpassungen erforderlich.

Die Erfindung ist jedoch nicht auf die vorliegenden Ausführungsbeispiele begrenzt. Beispielsweise ist die Erfindung auch bei anderen Arten von Kraftfahrzeugen vorteilhaft einsetzbar.

### Bezugszeichenliste

- 2: Kühlsystem
- 4: Batterieteilkreislauf
- 6: Erste Kühlmittelpumpe
- 8: Batterie
- 10: Heizteilkreislauf
- 12: Zweite Kühlmittelpumpe
- 14: Heizluftradiator
- 16: Kühlmittelheizung
- 18: Chillerteilkreislauf
- 20: Chiller
- 22: Mehrwegeventil
- 24: Rückschlagventil
- 26: Antriebsstrangteilkreislauf
- 28: Dritte Kühlmittelpumpe
- 30: Leistungselektronik
- 32: Elektromotor
- 34: Kühlluftradiator
- 36: Bypassleitung
- 38: Weiteres Mehrwegeventil
- 40: Weitere Bypassleitung

## Patentansprüche

1. Kühlsystem (2) für ein Kraftfahrzeug zum Umwälzen eines Kühlmittels, umfassend einerseits einen Batterieteilkreislauf (4) mit einer ersten Kühlmittelpumpe (6) und einer Batterie (8) und andererseits einen Heizteilkreislauf (10) zum Beheizen einer Fahrgastzelle des Kraftfahrzeugs mit einer zweiten Kühlmittelpumpe (12), einem Heizluftradiator (14) und einer Kühlmittelheizung (16) zum Beheizen des in dem Heizteilkreislauf (10) strömenden Kühlmittels, wobei das Kühlsystem (2) zusätzlich einen Chillerteilkreislauf (18) mit einem Chiller (20) aufweist, und wobei der Batterieteilkreislauf (4) und/oder der Heizteilkreislauf (10) und/oder der Chillerteilkreislauf (18) mittels eines Mehrwegeventils (22) des Kühlsystems (2) wahlweise miteinander kühlmittelleitend verbindbar sind,
**dadurch gekennzeichnet,**
**dass** das Mehrwegeventil (22) als ein Fünfwegeventil ausgebildet ist, wobei der Batterieteilkreislauf (4) mit einem ersten und einem zweiten Anschluss des Fünfwegeventils (22), der Heizteilkreislauf (10) mit dem ersten und einem dritten Anschluss des Fünfwegeventils (22) und der Chillerteilkreislauf (18) mit einem vierten und einem fünften Anschluss des Fünfwegeventils (22) kühlmittelleitend verbunden ist, und wobei der erste Anschluss des Fünfwegeventils (22) mit einem Eingang der ersten Kühlmittelpumpe (6), ein Ausgang der ersten Kühlmittelpumpe (6) mit einem Eingang der Batterie (8), ein Ausgang der Batterie (8) mit dem zweiten Anschluss des Fünfwegeventils (22), der dritte Anschluss des Fünfwegeventils (22) mit einem Eingang der zweiten Kühlmittelpumpe (12), ein Ausgang der zweiten Kühlmittelpumpe (12) mit einem Eingang der Kühlmittelheizung (16), ein Ausgang der Kühlmittelheizung (16) mit einem Eingang des Heizluftradiators (14), ein Ausgang des Heizluftradiators (14) mit dem ersten Anschluss des Fünfwegeventils (22) und dem Eingang der ersten Kühlmittelpumpe (6), der vierte Anschluss des Fünfwegeventils (22) mit einem Eingang des Chillers (20) und ein Ausgang des Chillers (22) mit dem fünften Anschluss des Fünfwegeventils (22) kühlmittelleitend verbunden ist.

2. Kühlsystem (2) nach Anspruch 1,
**dadurch gekennzeichnet,**
**dass** das Kühlsystem (2) zusätzlich eine Wärmepumpe zur Klimatisierung der Fahrgastzelle aufweist, wobei der Chiller (20) gleichzeitig als eine Komponente der Wärmepumpe ausgebildet ist.

3. Kühlsystem (22) nach Anspruch 1 oder 2,
**dadurch gekennzeichnet,**
**dass** der dritte Anschluss des Fünfwegeventils (22) und der Eingang der zweiten Kühlmittelpumpe (12) gemeinsam mittels eines Rückschlagventils (24) mit dem Eingang der ersten Kühlmittelpumpe (6), dem ersten Anschluss des Fünfwegeventils (22) und dem Ausgang des Heizluftradiators (14) kühlmittelleitend verbunden sind, wobei das Rückschlagventil (24) eine Kühlmittelströmung lediglich in Richtung des dritten Anschlusses des Fünfwegeventils (22) und des Eingangs der zweiten Kühlmittelpumpe (12) ermöglicht.

4. Kühlsystem (2) nach einem der Ansprüche 1 bis 3,
**dadurch gekennzeichnet,**
**dass** das Kühlsystem (2) zusätzlich einen Antriebsstrangteilkreislauf (26) mit einer dritten Kühlmittelpumpe (28), einer Leistungselektronik (30), einem Elektromotor (32) und einem Kühlluftradiator (34) zur Kühlung des in dem Antriebsstrangteilkreislauf (26) strömenden Kühlmittels aufweist, wobei der Antriebsstrangteilkreislauf (26) eine Bypassleitung (36) zu dem Kühlluftradiator (34) umfasst, und wobei der Batterieteilkreislauf (4) und/oder der Heizteilkreislauf (10) und/oder der Chillerteilkreislauf (18) und/oder der Antriebsstrangteilkreislauf (26) mittels des vorgenannten Mehrwegeventils (22) und eines weiteren Mehrwegeventils (38) des Kühlsystems (2) wahlweise miteinander kühlmittelleitend verbindbar sind.

5. Kühlsystem (2) nach Anspruch 4, rückbezogen auf Anspruch 1 oder 2,
**dadurch gekennzeichnet,**
**dass** das Mehrwegeventil (22) und das weitere Mehrwegeventil (38) jeweils als ein Fünfwegeventil ausgebildet sind, wobei der Batterieteilkreislauf (4) mit einem ersten Anschluss des weiteren Fünfwegeventils (38) und einem zweiten Anschluss des Fünfwegeventils (22), der Heizteilkreislauf (10) mit einem ersten und einem dritten Anschluss des Fünfwegeventils (22) und einem zweiten Anschluss des weiteren Fünfwegeventils (38), der Chillerteilkreislauf (18) mit einem vierten Anschluss des Fünfwegeventils (22) und mit einem dritten Anschluss des weiteren Fünfwegeventils (38), der Antriebsstrangteilkreislauf (26) mit einem fünften Anschluss des Fünfwegeventils (22) und einem vierten und einem fünften Anschluss des weiteren Fünfwegeventils (38) kühlmittelleitend verbunden ist.

6. Kühlsystem (2) nach Anspruch 5,
**dadurch gekennzeichnet,**
**dass** der erste Anschluss des Fünfwegeventils (22) mit dem zweiten Anschluss des weiteren Fünfwegeventils (38), der erste Anschluss des weiteren Fünfwegeventils (38) mit einem Eingang der ersten Kühlmittelpumpe (6), ein Ausgang der ersten Kühlmittelpumpe (6) mit einem Eingang der Batterie (8), ein Ausgang der Batterie (8) mit dem zweiten Anschluss des Fünfwegeventils (22), der dritte Anschluss des Fünfwegeventils (22) mit einem Eingang der zweiten Kühlmittelpumpe (12), ein Ausgang der zweiten Kühlmittelpumpe (12) mit einem Eingang der Kühlmittelheizung (16), ein Ausgang der Kühlmittelheizung (16) mit einem Eingang des Heizluftradiators (14), ein Ausgang des Heizluftradiators (14) mit dem zweiten Anschluss des weiteren Fünfwegeventils (38), der vierte Anschluss des Fünfwegeventils (22) mit einem Eingang des Chillers (20), ein Ausgang des Chillers (20) mit dem dritten Anschluss des weiteren Fünfwegeventils (38), der vierte Anschluss des weiteren Fünfwegeventils (38) mit einem Eingang des Kühlluftradiators (34), ein Ausgang des Kühlluftradiators (34) mit einem Eingang der dritten Kühlmittelpumpe (28), der fünfte Anschluss des weiteren Mehrwegeventils (38) mittels der Bypassleitung (36) mit dem Eingang der dritten Kühlmittelpumpe (28), ein Ausgang der dritten Kühlmittelpumpe (28) mit einem Eingang der Leistungselektronik (30), ein Ausgang der Leistungselektronik (30) mit einem Eingang des Elektromotors (32), ein Ausgang des Elektromotors (32) mit dem fünften Anschluss des Fünfwegeventils (22) kühlmittelleitend verbunden sind.

7. Kühlsystem (2) nach Anspruch 6,
**dadurch gekennzeichnet,**
**dass** der dritte Anschluss des Fünfwegeventils (22) und der Eingang der zweiten Kühlmittelpumpe (12) gemeinsam mittels eines Rückschlagventils (24) mit dem zweiten Anschluss des weiteren Fünfwegeventils (38) und des Ausgangs des Heizluftradiators (14) kühlmittelleitend verbunden sind, wobei das Rückschlagventil (24) eine Kühlmittelströmung lediglich in Richtung des dritten Anschlusses des Fünfwegeventils (22) und des Eingangs der zweiten Kühlmittelpumpe (12) ermöglicht.

## Claims

1. A cooling system (2) for a motor vehicle for circulating a coolant, comprising on the one hand a battery subcircuit (4) with a first coolant pump (6) and a battery (8), and on the other hand a heating subcircuit (10) for heating a passenger compartment of the motor vehicle with a second coolant pump (12), a heating air radiator (14) and a coolant heater (16) for heating the coolant flowing in the heating subcircuit (10), said cooling system (2) additionally having a chiller subcircuit (18) with a chiller (20), wherein the battery subcircuit (4) and/or the heating subcircuit (10) and/or the chiller subcircuit (18) can be selectively connected to one another by means of a multi-port valve (22) of the cooling system (2) in a coolant-conducting manner,
**characterized in that**
the multi-port valve (22) is designed as a five-way valve, with the battery subcircuit (4) being connected to a first and a second connection of the five-way valve (22), the heater subcircuit (10) being connected to the first and a third connection of the five-way valve (22) and the chiller subcircuit (18) being connected to a fourth and a fifth connection of the five-way valve (22) in a coolant-conducting manner, whereby the first connection of the five-way valve (22) is connected to an inlet of the first coolant pump (6), an outlet of the first coolant pump (6) is connected to an inlet of the battery (8), an outlet of the battery (8) is connected to the second connection of the five-way valve (22), the third connection of the five-way valve (22) is connected to an inlet of the second coolant pump (12), an outlet of the second coolant pump (12) is connected to an inlet of the coolant heater (16), an outlet of the coolant heater (16) is connected to an inlet of the heating air radiator (14), an outlet of the heating air radiator (14) is connected to the first connection of the five-way valve (22) and the inlet of the first coolant pump (6), the fourth connection of the five-way valve (22) is connected to an inlet of the chiller (20) and an outlet of the chiller (22) is connected to the fifth connection of the five-way valve (22) in a coolant-conducting manner.

2. A cooling system (2) according to claim 1,
**characterized in that**
the cooling system (2) additionally has a heat pump for air conditioning the passenger compartment, with the chiller (20) being simultaneously designed as a component of the heat pump.

3. A cooling system (2) according to claim 1 or 2,
**characterized in that**
the third connection of the five-way valve (22) and the inlet of the second coolant pump (12) are together connected by means of a non-return valve (24) to the inlet of the first coolant pump (6), the first connection of the five-way valve (22) and the outlet of the heating air radiator (14) in a coolant-conducting manner, with the non-return valve (24) enabling a coolant flow only in the direction of the third connection of the five-way valve (22) and the inlet of the second coolant pump (12).

4. A cooling system (2) according to one of claims 1 to 3,
**characterized in that**
the cooling system (2) additionally has a powertrain subcircuit (26) with a third coolant pump (28), power electronics (30), an electric motor (32) and a cooling air radiator (34) for cooling the coolant flowing in the powertrain subcircuit (26), said powertrain subcircuit (26) comprising a bypass line (36) to the cooling air radiator (34), whereby the battery subcircuit (4) and/or the heater subcircuit (10) and/or the chiller subcircuit (18) and/or the powertrain subcircuit (26) can be selectively connected to one another by means of the aforementioned multi-port valve (22) and a further multi-port valve (38) of the cooling system (2) in a coolant-conducting manner.

5. A cooling system (2) according to claim 4, referring back to claim 1 or 2,
**characterized in that**
the multi-port valve (22) and the further multi-port valve (38) are each designed as a five-way valve, with the battery subcircuit (4) being connected to a first connection of the further five-way valve (38) and to a second connection of the five-way valve (22), the heater subcircuit (10) being connected to a first and a third connection of the five-way valve (22) and to a second connection of the further five-way valve (38), the chiller subcircuit (18) being connected to a fourth connection of the five-way valve (22) and to a third connection of the further five-way valve (38), the powertrain subcircuit (26) being connected to a fifth connection of the five-way valve (22) and to a fourth and a fifth connection of the further five-way valve (38) in a coolant-conducting manner.

6. A cooling system (2) according to claim 5,
**characterized in that**
the first connection of the five-way valve (22) is connected to the second connection of the further five-way valve (38), the first connection of the further five-way valve (38) is connected to an inlet of the first coolant pump (6), an outlet of the first coolant pump (6) is connected to an inlet of the battery (8), an outlet of the battery (8) is connected to the second connection of the five-way valve (22), the third connection of the five-way valve (22) is connected to an inlet of the second coolant pump (12), an outlet of the second coolant pump (12) is connected to an inlet of the coolant heater (16), an outlet of the coolant heater (16) is connected to an inlet of the heating air radiator (14), an outlet of the heating air radiator (14) is connected to the second connection of the further five-way valve (38), the fourth connection of the five-way valve (22) is connected to an inlet of the chiller (20), an outlet of the chiller (20) is connected to the third connection of the further five-way valve (38), the fourth connection of the further five-way valve (38) is connected to an inlet of the cooling air radiator (34), an outlet of the cooling air radiator (34) is connected to an inlet of the third coolant pump (28), the fifth connection of the further multi-port valve (38) is connected by means of the bypass line (36) to the inlet of the third coolant pump (28), an outlet of the third coolant pump (28) is connected to an inlet of the power electronics (30), an outlet of the power electronics (30) is connected to an inlet of the electric motor (32), an outlet of the electric motor (32) is connected to the fifth connection of the five-way valve (22) in a coolant-conducting manner.

7. A cooling system (2) accordance to claim 6,
**characterized in that**
the third connection of the five-way valve (22) and the inlet of the second coolant pump (12) are together connected by means of a non-return valve (24) to the second connection of the further five-way valve (38) and the outlet of the heating air radiator (14) in a coolant-conducting manner, with the non-return valve (24) enabling a coolant flow only in the direction of the third connection of the five-way valve (22) and the inlet of the second coolant pump (12).

## Revendications

1. Système de refroidissement (2) pour un véhicule à moteur conçu pour faire circuler un liquide de refroidissement comprenant, d'une part, un circuit partiel de batterie (4) avec une première pompe de liquide de refroidissement (6) et une batterie (8) et, d'autre part, un circuit partiel de chauffage (10) pour réchauffer un habitacle du véhicule à moteur avec une deuxième pompe de liquide de refroidissement (12), un radiateur d'air de chauffage (14) et un chauffage de liquide de refroidissement (16) pour réchauffer le liquide de refroidissement circulant dans le circuit partiel de chauffage (10), le système de refroidissement (2) comportant en outre un circuit partiel de refroidisseur (18) avec un refroidisseur (20) et le circuit partiel de batterie (4) et/ou le circuit partiel de chauffage (10) et/ou le circuit partiel de refroidisseur (18) pouvant être reliés entre eux par une conduite de fluide de refroidissement au moyen d'une vanne multivoies (22) du système de refroidissement (2),
**caractérisé en ce que**
la vanne multivoies (22) est réalisée sous la forme d'une vanne à cinq voies, le circuit partiel de batterie (4) étant relié par une conduite de liquide de refroidissement à un premier et un deuxième raccord de la vanne à cinq voies (22), le circuit partiel de chauffage (10) étant relié par une conduite de liquide de refroidissement au premier et un troisième raccord de la vanne à cinq voies (22) et le circuit partiel de refroidisseur (18) étant relié par une conduite de liquide de refroidissement à un quatrième et un cinquième raccord de la vanne à cinq voies (22), et le premier raccord de la vanne à cinq voies (22) étant relié à une entrée de la première pompe de liquide de refroidissement (6), une sortie de la première pompe de liquide de refroidissement (6) étant reliée à une entrée de la batterie (8), une sortie de la batterie (8) étant reliée au deuxième raccord de la vanne à cinq voies (22), le troisième raccord de la vanne à cinq voies (22) avec une entrée de la deuxième pompe de liquide de refroidissement (12), une sortie de la deuxième pompe de liquide de refroidissement (12) avec une entrée du chauffage de liquide de refroidissement (16), une sortie du chauffage de liquide de refroidissement (16) avec une entrée du radiateur d'air de chauffage (14), une sortie du radiateur d'air de chauffage (14) au premier raccord de la vanne à cinq voies (22) et à l'entrée de la première pompe de liquide de refroidissement (6), le quatrième raccord de la vanne à cinq voies (22) à une entrée du refroidisseur (20) et une sortie du refroidisseur (22) au cinquième raccord de la vanne à cinq voies (22) par des conduites de liquide de refroidissement.

2. Système de refroidissement (2) selon la revendication 1,
**caractérisé en ce que**
le système de refroidissement (2) comporte en outre une pompe à chaleur pour la climatisation de l'habitacle, le refroidisseur (20) étant simultanément conçu comme un composant de la pompe à chaleur.

3. Système de refroidissement (2) selon la revendication 1 ou 2,
**caractérisé en ce que**
le troisième raccord de la vanne à cinq voies (22) et l'entrée de la deuxième pompe de liquide de refroidissement (12) sont reliés ensemble au moyen d'un clapet anti-retour (24) par des conduites de liquide de refroidissement à l'entrée de la première pompe de liquide de refroidissement (6), au premier raccord de la vanne à cinq voies (22) et à la sortie du radiateur d'air de chauffage (14), le clapet anti-retour (24) permettant un écoulement de liquide de refroidissement uniquement en direction du troisième raccord de la vanne à cinq voies (22) et de l'entrée de la deuxième pompe de liquide de refroidissement (12).

4. Système de refroidissement (2) selon l'une des revendications 1 à 3,
**caractérisé en ce que**
le système de refroidissement (2) comporte en outre un circuit partiel de chaîne cinématique (26) avec une troisième pompe de liquide de refroidissement (28), une électronique de puissance (30), un moteur électrique (32) et un radiateur d'air de refroidissement (34) pour le refroidissement du liquide de refroidissement s'écoulant dans le circuit partiel de chaîne cinématique (26), le circuit partiel de chaîne cinématique (26) comprenant une conduite de dérivation (36) vers le radiateur d'air de refroidissement (34) et le circuit partiel de batterie (4) et/ou le circuit partiel de chauffage (10) et/ou le circuit partiel de refroidisseur (18) et/ou le circuit partiel de chaîne cinématique (26) pouvant être reliés entre eux au choix par une conduite de liquide de refroidissement au moyen de la vanne multivoies (22) précitée et d'une autre vanne multivoies (38) du système de refroidissement (2).

5. Système de refroidissement (2) selon la revendication 4, en référence à la revendication 1 ou 2,
**caractérisé en ce que**
la vanne multivoies (22) et l'autre vanne multivoies (38) sont réalisées chacune sous la forme d'une vanne à cinq voies, le circuit partiel de batterie (4) étant relié à un premier raccord de l'autre vanne à cinq voies (38) et à un deuxième raccord de la vanne à cinq voies (22), le circuit partiel de chauffage (10) étant relié à un premier et un troisième raccord de la vanne à cinq voies (22) et un deuxième raccord de l'autre vanne à cinq voies (38), le circuit partiel de refroidisseur (18) étant relié à un quatrième raccord de la vanne à cinq voies (22) et à un troisième raccord de l'autre vanne à cinq voies (38), le circuit partiel de chaîne cinématique (26) étant relié à un cinquième raccord de la vanne à cinq voies (22) et à un quatrième et cinquième raccord de l'autre vanne à cinq voies (38), par des conduites de liquide de refroidissement.

6. Système de refroidissement (2) selon la revendication 5,
**caractérisé en ce que**
le premier raccord de la vanne à cinq voies (22) est relié au deuxième raccord de l'autre vanne à cinq voies (38), le premier raccord de l'autre vanne à cinq voies (38) à une entrée de la première pompe de liquide de refroidissement (6), une sortie de la première pompe de liquide de refroidissement (6) à une entrée de la batterie (8), une sortie de la batterie (8) au deuxième raccord de la vanne à cinq voies (22), le troisième raccord de la vanne à cinq voies (22) à une entrée de la deuxième pompe de liquide de refroidissement (12), une sortie de la deuxième pompe de liquide de refroidissement (12) à une entrée du chauffage de liquide de refroidissement (16), une sortie du chauffage de liquide de refroidissement (16) à une entrée du radiateur d'air chaud (14), une sortie du radiateur d'air chaud (14) au deuxième raccord de l'autre vanne à cinq voies (38), le quatrième raccord de la vanne à cinq voies (22) à une entrée du refroidisseur (20), une sortie du refroidisseur (20) au troisième raccord de l'autre vanne à cinq voies (38), le quatrième raccord de l'autre vanne à cinq voies (38) à une entrée du radiateur d'air de refroidissement (34), une sortie du radiateur d'air de refroidissement (34) à une entrée de la troisième pompe de liquide de refroidissement (28), par des conduites de liquide de refroidissement, et **en ce que** le cinquième raccord de l'autre vanne multivoies (38) est relié au moyen de la conduite de dérivation (36) à l'entrée de la troisième pompe de liquide de refroidissement (28), une sortie de la troisième pompe de liquide de refroidissement (28) à une entrée de l'électronique de puissance (30), une sortie de l'électronique de puissance (30) à une entrée du moteur électrique (32), une sortie du moteur électrique (32) au cinquième raccord de la vanne à cinq voies (22) par des conduites de liquide de refroidissement.

7. Système de refroidissement (2) selon la revendication 6,
**caractérisé en ce que**
le troisième raccord de la vanne à cinq voies (22) et l'entrée de la deuxième pompe de liquide de refroidissement (12) sont reliés ensemble au moyen d'un clapet anti-retour (24) au deuxième raccord de l'autre vanne à cinq voies (38) et à la sortie du radiateur d'air de chauffage (14) par des conduites de liquide de refroidissement, le clapet anti-retour (24) permettant un écoulement de liquide de refroidissement uniquement en direction du troisième raccord de la vanne à cinq voies (22) et de l'entrée de la deuxième pompe de liquide de refroidissement (12).
